# FASCICULE DE BREVET EUROPEEN

(11) **EP 3 056 424 B1**
(45) Date de publication et mention de la délivrance du brevet: **13.09.2017**
(21) Numéro de dépôt: 16154297.2
(22) Date de dépôt: 04.02.2016
(51) Int. Cl.: B64C 1/14

(54) **CABINE DE PILOTAGE D'UN AVION EQUIPEE D'UNE EVACUATION DE SECOURS**
COCKPIT EINES FLUGZEUGS, DAS MIT EINEM NOTEVAKUIERUNGSSYSTEM AUSGESTATTET IST
AIRCRAFT COCKPIT PROVIDED WITH AN EMERGENCY EXIT

(30) Priorité: 11.02.2015 FR 1551100
(43) Date de publication de la demande: 17.08.2016
(73) Titulaire: AIRBUS OPERATIONS (SAS), 31060 Toulouse (FR)
(72) Inventeur: AURIAC, Vincent, 31650 SAINT ORENS DE GAMEVILLE (FR); CHALLANCIN, Loïc, 31500 TOULOUSE (FR)
(74) Mandataire: Fantin, Laurent

(56) Documents cités:
- EP-A1- 2 749 492
- FR-A1- 2 960 212
- US-A- 4 176 812
- US-A- 4 541 595

## Description

La présente invention se rapporte à une cabine de pilotage d'un avion équipée d'une évacuation de secours obturée par une porte de secours et une trappe de secours.

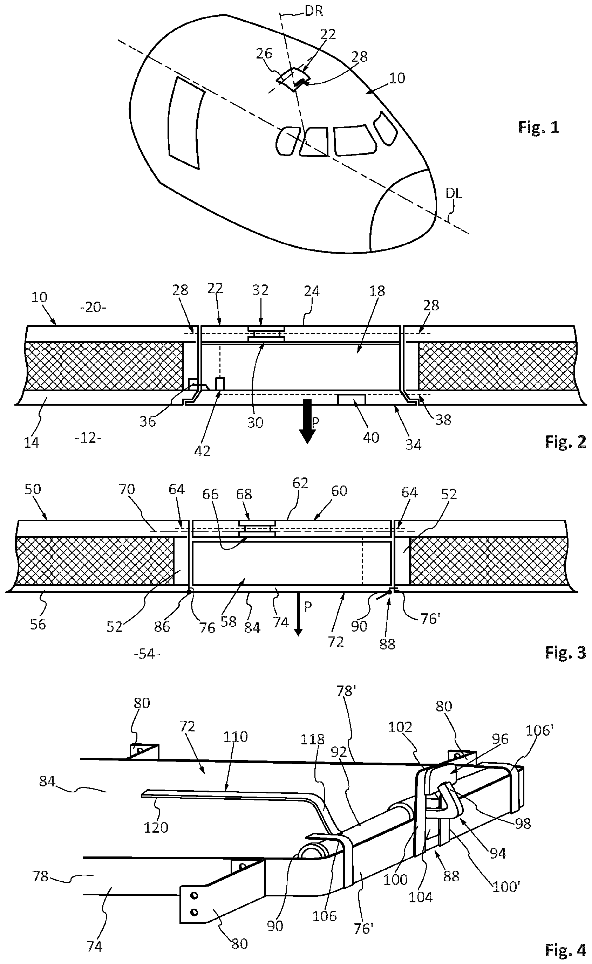

Le document US4176812 montre une cabine d'un avion avec une porte se secours ayant une trappe intérieure. Comme illustré sur les figures 1 et 2, un avion comprend une peau 10 formant le fuselage, une cloison intérieure 14 qui délimite une cabine de pilotage 12.

L'avion comprend pour évacuer les pilotes une ouverture d'évacuation 18 permettant de faire communiquer l'intérieur de la cabine 12 avec l'extérieur 20 de l'avion et au moins une porte de secours 22 permettant d'obturer ou de dégager l'ouverture d'évacuation 18. Selon un mode de réalisation illustré sur la figure 1, cette porte de secours 22 est positionnée sur la partie supérieure du fuselage, à l'aplomb de la cabine de pilotage 12. Cette porte de secours 22 comprend une paroi avec une surface extérieure 24 dans la continuité de la surface extérieure de la peau 10 du fuselage. Cette porte de secours 22 comprend une articulation 26 lui permettant de pivoter vers l'intérieur de la cabine et des moyens de verrouillage/déverrouillage 28 contrôlés par une commande d'ouverture intérieure 30 actionnable depuis l'intérieur du fuselage et par une commande d'ouverture extérieure 32 actionnable depuis l'extérieur du fuselage. A l'intérieur du fuselage, l'avion comprend une trappe de secours 34 qui obture l'ouverture d'évacuation 18 et assure la continuité de la cloison intérieure 14 de la cabine 12.

Cette trappe de secours 34 se présente sous la forme d'un panneau rigide qui comprend :
- sur un premier côté, des cols de cygne 36 configurés pour permettre à la trappe de secours 34 de pivoter en position ouverte et de se détacher de la cloison intérieure 14,
- sur un deuxième côté opposé au premier côté, un mécanisme de verrouillage/déverrouillage 38 configuré pour occuper un état verrouillé dans lequel le mécanisme 38 maintient la trappe de secours 34 en position fermée et un état déverrouillé dans lequel il ne maintient plus la trappe de secours 34 en position fermée et autorise son pivotement grâce aux cols de cygne 36,
- sur une face de la trappe de secours 34 orientée vers l'intérieur de la cabine, une première commande 40 configurée pour provoquer le passage du mécanisme de verrouillage/déverrouillage 38 à l'état déverrouillé lorsqu'elle est actionnée par une personne depuis l'intérieur de la cabine,
- sur une face de la trappe de secours 34 orientée vers la porte de secours 22, une seconde commande 42 configurée pour provoquer le passage du mécanisme de verrouillage/déverrouillage 38 à l'état déverrouillé lorsqu'elle est actionnée par la porte de secours 22 lors de son ouverture.

La première commande 40 est une poignée reliée au mécanisme de verrouillage/déverrouillage 38. La seconde commande 42 est un levier pivotant qui est relié par l'intermédiaire d'un câble au mécanisme de verrouillage/déverrouillage 38.

Selon cette configuration, le poids de la trappe de secours 34 favorise son pivotement vers l'intérieur de la cabine lorsqu'elle n'est plus maintenue par le mécanisme de verrouillage/déverrouillage 38. Par conséquent, la trappe de secours 34 doit avoir une certaine masse pour fonctionner correctement.

Aussi, la présente invention vise à proposer une trappe de secours qui assure les mêmes fonctions qu'une trappe de secours de l'art antérieur tout en ayant une masse inférieure.

A cet effet, l'invention a pour objet une cabine de pilotage d'un avion comprenant une peau extérieure rapportée sur une structure, une cloison intérieure délimitant la cabine, et une ouverture d'évacuation traversant ladite peau extérieure et ladite cloison intérieure, ladite ouverture d'évacuation étant obturée par :
- une porte de secours montée articulée sur la structure entre une position fermée dans laquelle la porte de secours est disposée dans le prolongement de la peau extérieure et obture ladite ouverture d'évacuation et une position ouverte dans laquelle la porte de secours pivote vers l'intérieur de la cabine, ladite porte de secours comprenant des moyens de verrouillage/déverrouillage,
- une trappe de secours, mobile entre une position fermée dans laquelle la trappe de secours assure la continuité de la cloison intérieure de la cabine et une position ouverte, ladite trappe de secours comprenant un mécanisme de verrouillage/déverrouillage.

Selon l'invention, la trappe de secours comprend une toile reliée de manière permanente à la structure, par un premier côté et le mécanisme de verrouillage/déverrouillage comprend :
- une première partie solidaire d'un deuxième côté, opposé au premier côté et une deuxième partie solidaire de la structure, les première et deuxième parties coopérant à l'état verrouillé de manière à accrocher le deuxième côté de la toile à la structure,
- une tige solidarisée au deuxième côté et une manette actionnable depuis la cabine et reliée à ladite tige.

Le fait de choisir une trappe de secours sous la forme d'une toile permet de réduire la masse embarquée par rapport à une trappe de l'art antérieur.

De préférence, la toile est élastique ou comprend au moins une bande élastique de manière à ce que la toile soit tendue lorsqu'elle obture l'ouverture d'évacuation. Cette configuration favorise le passage de l'état verrouillé à l'état déverrouillé. Ainsi, ce n'est pas le poids de la trappe de secours qui favorise son ouverture mais l'élasticité de la toile.

Selon une première variante, la première partie du mécanisme de verrouillage/déverrouillage comprend un crochet solidaire de la tige et qui coopère avec la deuxième partie comprenant une gâche.

Selon cette première variante, la trappe de secours comprend au moins une patte de stabilisation solidaire de la structure, configurée pour limiter le basculement de la tige vers la porte de secours lorsque la toile obture l'ouverture d'évacuation.

Selon cette première variante, le mécanisme de verrouillage/déverrouillage comprend un levier qui comporte une première extrémité reliée à la tige et une seconde extrémité orientée vers la porte de secours, ledit levier étant automatiquement actionnable par ladite porte de secours lors de son pivotement vers l'intérieur de la cabine.

Selon une deuxième variante, le mécanisme de verrouillage/déverrouillage comprend une seconde tige qui comporte au moins un crochet configuré pour retenir la première tige, ladite seconde tige étant reliée à la structure par l'intermédiaire d'une liaison pivotante de manière à occuper une position de maintien dans laquelle le crochet retient la première tige et une position pivotée dans laquelle le crochet ne retient plus la première tige.

Selon cette deuxième variante, le mécanisme de verrouillage/déverrouillage comprend au moins un ressort de torsion configuré pour maintenir la seconde tige dans la position de maintien.

De préférence, selon cette deuxième variante, le mécanisme de verrouillage/déverrouillage comprend un levier qui comporte une première extrémité reliée à la seconde tige et une seconde extrémité orientée vers la porte de secours, ledit levier étant automatiquement actionnable par ladite porte de secours lors de son pivotement vers l'intérieur de la cabine. D'autres caractéristiques et avantages ressortiront de la description qui va suivre de l'invention, description donnée à titre d'exemple uniquement, en regard des dessins annexés sur lesquels :
- La figure 1 est une vue en perspective de l'avant d'un avion illustrant une porte de secours, positionnée au-dessus d'une cabine de pilotage,
- La figure 2 est une coupe schématique d'une ouverture d'évacuation selon l'art antérieur,
- La figure 3 est une coupe schématique d'une ouverture d'évacuation selon un mode de réalisation de l'invention,
- La figure 4 est une vue en perspective d'une partie d'une trappe de secours selon une première variante de l'invention,
- Les figures 5A à 5D sont des schémas illustrant le principe de fonctionnement de la trappe de secours visible sur la figure 4 actionnée depuis l'intérieur,
- La figure 6 est une vue en perspective illustrant le principe de fonctionnement de la trappe de secours visible sur la figure 4 actionnée depuis l'extérieur,
- La figure 7 est une vue en perspective d'une partie d'une trappe de secours selon une deuxième variante de l'invention,
- Les figures 8A à 8C sont des schémas illustrant le principe de fonctionnement de la trappe de secours visible sur la figure 7 actionnée depuis l'intérieur, et
- La figure 9 est une vue en perspective illustrant le principe de fonctionnement de la trappe de secours visible sur la figure 7 actionnée depuis l'extérieur.

Sur la figure 3, on a représenté une partie d'un avion qui comprend un fuselage avec une peau 50 extérieure rapportée sur une structure 52, et à l'intérieur du fuselage, une cabine 54 délimitée par une cloison intérieure 56 espacée de la peau 50.

L'avion comprend au moins une ouverture d'évacuation 58 qui permet de faire communiquer l'intérieur de la cabine 54 avec l'extérieur de l'avion. Selon une implantation, l'ouverture d'évacuation 58 est positionnée sur la partie supérieure du fuselage, à l'aplomb de la cabine de pilotage.

Pour la suite de la description, comme indiqué sur la figure 1, une direction longitudinale DL correspond à la direction qui s'étend de la pointe avant à la pointe arrière de l'avion. Un plan transversal est un plan perpendiculaire à la direction longitudinale. Une direction radiale DR est une direction perpendiculaire à la direction longitudinale.

Selon une configuration, l'ouverture d'évacuation 58 est délimitée par un conduit comprenant une paroi avant comprise dans un premier plan transversal, une paroi arrière comprise dans un deuxième plan transversal, une paroi inférieure et une paroi supérieure parallèles à la direction longitudinale et des portions courbes reliant les différentes parois. Ainsi, l'ouverture d'évacuation 58 a une section approximativement carrée ou rectangulaire avec des angles arrondis.

Toutefois, l'ouverture d'évacuation 58 n'est pas limitée à cette géométrie et d'autres formes sont envisageables.

L'ouverture d'évacuation 58 est obturée par une porte de secours 60 amovible, positionnée dans le prolongement de la peau 50 et dont la géométrie est adaptée à celle de l'ouverture d'évacuation 58. Cette porte de secours 60 comprend une paroi avec une surface extérieure 62 dans la continuité de la surface extérieure de la peau 50 du fuselage lorsque la porte de secours 60 obture l'ouverture d'évacuation 58. La porte de secours 60 comprend des moyens de verrouillage/déverrouillage 64 contrôlés par une commande d'ouverture intérieure 66 actionnable depuis l'intérieur du fuselage et par une commande d'ouverture extérieure 68 actionnable depuis l'extérieur du fuselage.

Selon un mode de réalisation, la porte de secours 60 est reliée à la structure 52 de l'avion par un axe de pivotement 70 parallèle à l'une des parois de l'ouverture d'évacuation. Il est de préférence positionné au niveau de la paroi arrière de l'ouverture d'évacuation 58. Lorsque les moyens de verrouillage/déverrouillage 64 sont à l'état déverrouillé, la porte de secours 60 peut pivoter autour de l'axe de pivotement 70 vers l'intérieur du fuselage. L'avion comprend au niveau de l'ouverture d'évacuation 58 et de la cloison intérieure 56, une trappe de secours 72 mobile entre une position fermée dans laquelle elle obture l'ouverture d'évacuation 58 et une position ouverte dans laquelle elle dégage l'ouverture d'évacuation 58. Cette trappe de secours 72 est disposée dans la continuité de la cloison intérieure 56 en position fermée.

Selon un mode de réalisation, la trappe de secours 72 comprend un cadre 74 qui entoure l'ouverture d'évacuation 58 et qui coopère avec la cloison intérieure 56 de manière à obtenir des surfaces continues. Ce cadre 74 comprend une première paroi 76 et une deuxième paroi 76' approximativement parallèles à la direction longitudinale ainsi qu'une paroi arrière 78 dans un plan transversal et une paroi avant 78' dans un autre plan transversal. Ces parois 76, 76', 78, 78' forment un conduit qui entoure l'ouverture d'évacuation 58.

Ce cadre 74 est relié à la structure 52 de l'avion par des éléments de liaison 80, comme par exemple quatre pattes de fixation visibles sur la figure 4.

Selon une caractéristique de l'invention, la trappe de secours 72 comprend :
- une toile 84 avec un premier côté 86 relié de manière permanente à un premier bord du cadre 74,
- un mécanisme de verrouillage/déverrouillage 88, 88' configuré pour maintenir ou non accroché un deuxième côté 90 de la toile 84 (distant du premier côté 86) à un deuxième côté du cadre 74.

Ainsi, dans la position fermée, la toile 84 est accrochée et tendue entre les première et deuxième parois du cadre 74 et obture l'ouverture d'évacuation 58. Dans la position ouverte, ladite toile 84 n'est plus accrochée et elle est suspendue uniquement à la première paroi du cadre 74 et dégage l'ouverture d'évacuation 58.

Selon une configuration, la première paroi du cadre 74 correspond à la première paroi 76 du cadre 74 et la deuxième paroi du cadre 74 correspond à la deuxième paroi 76' du cadre 74. Selon un mode de réalisation, la toile 84 a un pourtour carré ou rectangulaire approximativement identique à la section de l'ouverture d'évacuation 58.

Par toile, on entend un élément en tissu ou en matière plastique souple et déformable avec une faible épaisseur.

Avantageusement, la toile 84 est élastique ou comprend au moins une bande élastique de manière à la tendre lorsqu'elle est accrochée et en position fermée.

Selon un mode de réalisation, le premier côté 86 de la toile 84 est relié au cadre 74 par l'intermédiaire d'une liaison qui comprend un ourlet au niveau du premier côté 86 de la toile 84 et une tige qui est insérée dans l'ourlet, ladite tige comprenant à chacune de ses extrémités une patte reliée par des rivets ou des boulons au cadre 74. En variante, le premier côté 86 de la toile 84 est pincé entre le cadre 74 et une contreplaque fixée audit cadre par rivetage ou boulonnage.

Sur les figures 4, 5A à 5D et 6, on a illustré une première variante du mécanisme de verrouillage/déverrouillage 88.

Selon cette variante, le mécanisme de verrouillage/déverrouillage 88 comprend une tige 92 solidarisée au deuxième côté 90 de la toile 84, ladite tige 92 comportant un crochet 94 qui coopère avec une gâche 96 solidaire du cadre 74 prévue au niveau de la deuxième paroi 76' dudit cadre 74.

De préférence, la tige 92 a une longueur approximativement égale à celle du deuxième côté 90 de la toile 84.

Ainsi, le mécanisme de verrouillage/déverrouillage 88 est à l'état verrouillé et la toile 84 est accrochée lorsque le crochet 94 coopère avec la gâche 96. Il est à l'état déverrouillé et la toile 84 n'est plus accrochée lorsque le crochet 94 ne coopère pas avec la gâche 96.

Le crochet 94 est configuré de manière à ce que, lorsque la tige 92 se déplace vers l'intérieur de la cabine, ledit crochet 94 se désengage de la gâche 96. De préférence, le crochet 94 comprend une extrémité 98 qui coopère avec la gâche 96 et qui est orientée vers la porte de secours 60 en direction de l'extérieur de l'avion.

Selon un mode de réalisation, le crochet 94 a une forme en L, une première branche du L étant reliée à la tige 92, l'autre branche du L étant configurée pour coopérer avec la gâche 96 et pointant en direction de l'extérieur de l'avion.

Selon un mode de réalisation, la gâche 96 a une forme en U avec deux branches 100, 100' parallèles et espacées d'une distance suffisante pour autoriser le passage du crochet 94 entre elles et une base 102 qui comporte une surface d'appui pour le crochet 94. La base 102 est décalée vers l'extérieur de l'avion par rapport aux branches 100, 100'.

Les branches 100, 100' sont reliées au cadre 74 et la base 102 est espacée du cadre 74 de manière à ce que les branches 100, 100', la base 102 et le cadre 74 forment un orifice traversé par le crochet 94. La base 102 doit être suffisamment espacée du cadre 74 pour permettre l'introduction ou la sortie du crochet 94. Comme illustré sur la figure 4, le cadre 74 peut comprendre une découpe 104 pour augmenter la distance entre le cadre 74 et la base 102.

Avantageusement, au moins une patte de stabilisation 106 est solidarisée au cadre 74 pour maintenir la toile 84 dans un plan lui permettant d'obturer l'ouverture d'évacuation 58 et limiter le basculement de la tige 92 vers la porte de secours 60 lorsque la toile 84 est accrochée et la trappe de secours en position fermée. Selon un mode de réalisation, chaque patte de stabilisation 106 a un profil en L, l'une des branches étant solidarisée au cadre 74, l'autre branche étant en contact avec la tige 92 et décalée vers l'extérieur de l'avion par rapport à ladite tige 92 lorsque la toile 84 est accrochée.

De préférence, le crochet 94 est positionné à équidistance des extrémités de la tige 92 et deux pattes de stabilisation 106, 106' sont prévues à proximité de chaque extrémité de la tige 92. Ainsi, les pattes de stabilisation 106, 106' limitent les mouvements de pivotement de la tige 92 par rapport au crochet 94.

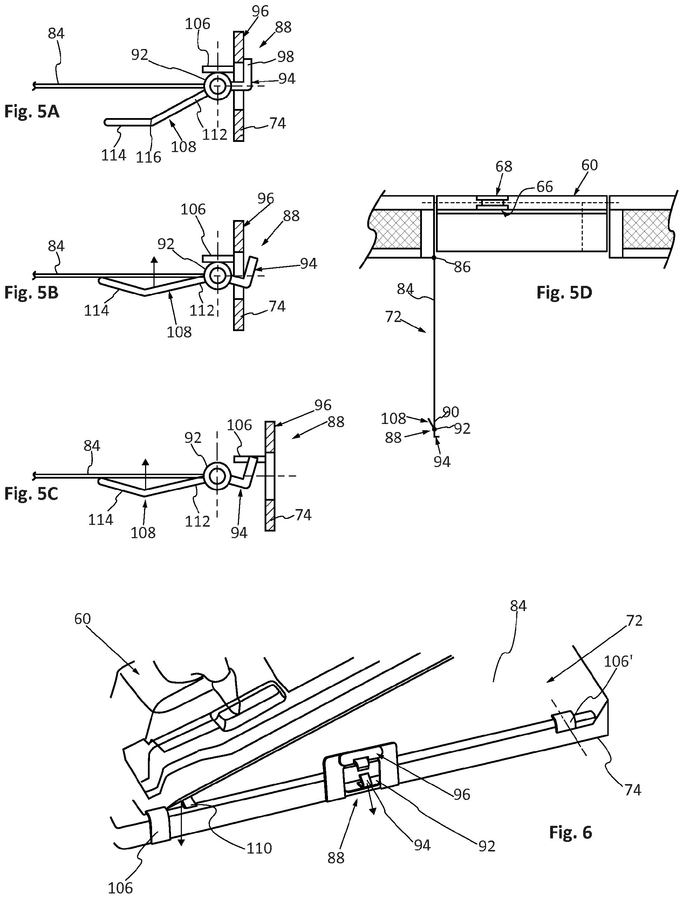

Le mécanisme de verrouillage/déverrouillage 88 comprend une manette 108 (visible sur les figures 5A à 5D) accessible depuis la cabine 54 et un levier 110 positionné entre la toile 84 et la porte de secours 60 de manière à être actionné par la porte de secours 60 lors de son ouverture.

Selon un mode de réalisation, la manette 108 comprend une première extrémité 112 reliée à la tige 92 et une seconde extrémité 114 configurée pour être saisie par une personne. La manette 108 s'étend à partir de la tige 92 vers le premier côté 86 de la toile 84 et l'intérieur de la cabine, en formant un angle avec la toile 84, ledit angle étant suffisamment important pour permettre à une personne de saisir la manette 108 et la faire pivoter en direction de la toile 84 de manière à ce que le crochet 94 se désengage de la gâche 96. De préférence, la manette 108 est perpendiculaire à la tige 92.

Selon un mode de réalisation, la manette 108 comprend un coude 116 de façon à ce que la seconde extrémité 114 soit sensiblement parallèle à la toile 84 à l'état verrouillé.

Selon une configuration, la manette 108 est disposée dans le prolongement du crochet 94.

Selon un mode de réalisation, le levier 110 comprend une première extrémité 118 reliée à la tige 92 et une seconde extrémité 120 sensiblement parallèle à la toile 84 à l'état verrouillé. Le levier 110 s'étend à partir de la tige 92 vers le premier côté 86 de la toile 84 et l'extérieur de la cabine. La seconde extrémité 120 est écartée de la toile 84 d'une distance telle que le mouvement d'ouverture de la porte de secours 60 provoque le passage du mécanisme de verrouillage/déverrouillage 88 à l'état déverrouillé. De préférence, le levier 110 est perpendiculaire à la tige 92.

Selon une configuration, le levier 110 est relié à la tige 92 à proximité de l'extrémité de la tige 92 la plus éloignée de l'axe de pivotement 70 de la porte de secours 60.

Comme illustré sur la figure 5A, à l'état verrouillé, la toile 84 est tendue et le crochet 94 coopère avec la gâche 96.

Pour ouvrir l'ouverture d'évacuation 58 depuis l'intérieur de la cabine, une personne saisit la manette 108 et exerce un effort en direction de la toile 84, comme illustré sur la figure 5B.

La tige 92 étant maintenue par les pattes de stabilisation 106, 106', cette action provoque une rotation de la tige 92 sur elle-même. A partir d'un certain angle de rotation, le crochet 94 ne coopère plus avec la gâche 96 et le mécanisme de verrouillage/déverrouillage 88 passe à l'état déverrouillé. Dans la mesure où la toile 84 est tendue lorsqu'elle est accrochée, son élasticité favorise le désengagement du crochet 96 et le passage de la trappe de secours en position ouverte, comme illustré sur la figure 5C.

La toile 84 n'étant plus accrochée, elle est suspendue par son premier côté 86 et dégage l'ouverture d'évacuation 58, comme illustré sur la figure 5D.

La présence de la tige 92 au niveau du deuxième côté 90 permet à la toile 84 de pendre sensiblement verticalement.

En suivant, la personne peut ouvrir la porte de secours 60 en actionnant la commande d'ouverture intérieure 66.

Pour ouvrir l'ouverture d'évacuation 58 depuis l'extérieur de l'avion, la porte de secours 60 est ouverte en actionnant la commande d'ouverture extérieure 68. Dès lors la porte de secours 60 pivote vers l'intérieur de la cabine. Comme illustré sur la figure 6, la porte de secours 60 appuie sur le levier 110. La tige 92 étant maintenue par la patte de stabilisation 106' située à l'autre extrémité de la tige 92 par rapport au levier 110, l'action de la porte de secours 60 sur le levier 110 provoque un pivotement de la tige 92 par rapport à la patte de stabilisation 106'. A partir d'un certain angle de pivotement, le crochet 94 ne coopère plus avec la gâche 96 et le mécanisme de verrouillage/déverrouillage 88 passe à l'état déverrouillé. La toile 84 n'étant plus accrochée, elle est suspendue par son premier côté 86 et dégage l'ouverture d'évacuation 58.

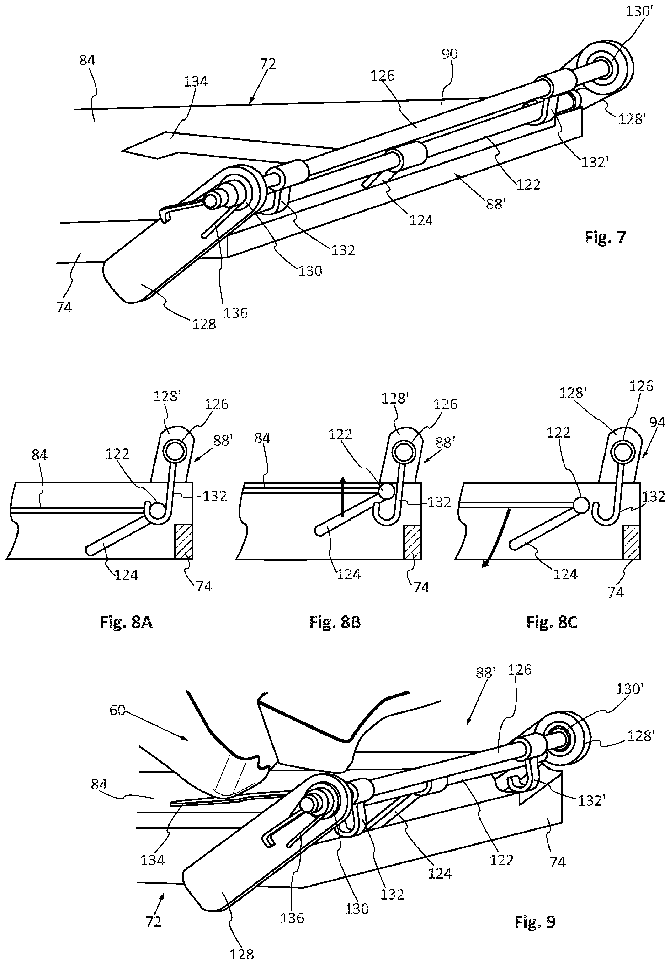

Sur les figures 7, 8A à 8C et 9, on a illustré une deuxième variante du mécanisme de verrouillage/déverrouillage 88'.

Comme précédemment, le mécanisme de verrouillage/déverrouillage 88' comprend une première tige 122 solidarisée au deuxième côté 90 de la toile 84 qui comporte une manette 124 actionnable depuis l'intérieur de la cabine.

De préférence, la première tige 122 a une longueur approximativement égale à celle du deuxième côté 90 de la toile 84. La manette 124 peut être identique à la manette 108 de la première variante.

Le mécanisme de verrouillage/déverrouillage 88' comprend une seconde tige 126, parallèle à la première tige 122, qui est reliée au cadre 74 par l'intermédiaire d'une liaison pivotante autorisant la seconde tige 126 à pivoter sur elle-même. Selon un mode de réalisation, le cadre 74 comprend deux supports 128, 128' qui comprennent des paliers 130, 130' dans lesquels sont montées pivotantes les extrémités de la seconde tige 126.

La seconde tige 126 comprend au moins un crochet 132, ouvert vers l'extérieur de la cabine, configuré pour retenir la première tige 122. Avantageusement, la seconde tige 126 comprend deux crochets 132, 132'. Cette configuration améliore la stabilité de la première tige 122. Selon un mode de réalisation, les crochets 132, 132' sont les plus écartés possible pour renforcer la stabilité de la première tige 122.

Le mécanisme de verrouillage/déverrouillage 88' comprend un levier 134 comportant une première extrémité reliée à la seconde tige 126 et une seconde extrémité orientée vers la porte de secours 60 actionnable par la porte de secours 60 lors de son ouverture.

Selon une configuration, les crochets 132, 132' sont décalés vers l'intérieur de la cabine par rapport à la seconde tige 126. Par conséquent, la seconde tige 126 est décalée vers l'extérieur de la cabine par rapport à la première tige 122 et par rapport à la toile 84. Selon cette configuration, le levier 134 s'étend perpendiculairement à la seconde tige 126 en direction du premier côté 86 de la toile 84, dans un plan approximativement parallèle à la toile 84.

La seconde tige 126 est montée pivotante par rapport aux supports 130, 130' et occupe une position de maintien (visible sur la figure 7) dans laquelle les crochets 132, 132' retiennent la première tige 124 et une position pivotée (visible sur la figure 9) dans laquelle les crochets 132, 132' ne retiennent plus la première tige 124. De préférence, au moins un ressort de torsion 136 est emmanché à une extrémité de la seconde tige 126 et positionné de manière à maintenir la seconde tige 126 dans la position de maintien.

Selon cette configuration, pour accrocher la toile 84, il est nécessaire d'utiliser le levier 134 pour positionner la seconde tige pivotante 126 en position pivotée, de tendre la toile 84 pour disposer la première tige 124 au niveau des crochets 132, 132' puis de relâcher le levier 134 afin que les crochets 132, 132' retiennent la première tige 124, comme illustré sur la figure 8A.

Selon la deuxième variante, pour ouvrir l'ouverture d'évacuation 58 depuis l'intérieur de la cabine, une personne saisit la manette 124 et exerce un effort de manière à déplacer la première tige 124 en direction de l'extérieur de la cabine, comme illustré sur la figure 8B. Après une certaine course, la première tige 124 n'est plus maintenue par les crochets 132, 132', le mécanisme de verrouillage/déverrouillage passe à l'état déverrouillé. Dans la mesure où la toile 84 est tendue lorsqu'elle est accrochée, son élasticité favorise le désengagement de la première tige 124 avec les crochets 132, 132' et le passage à l'état déverrouillé comme illustré sur la figure 8B. La toile 84 n'étant plus accrochée, elle pivote, comme illustré sur la figure 8C, de façon à dégager l'ouverture d'évacuation 58.

Pour ouvrir l'ouverture d'évacuation 58 depuis l'extérieur de l'avion, la porte de secours 60 est ouverte en actionnant la commande d'ouverture extérieure 68. Dès lors la porte de secours 60 pivote vers l'intérieur de la cabine. Comme illustré sur la figure 9, la porte de secours 60 appuie sur le levier 134. Cette action provoque le pivotement de la seconde tige 126 sur elle-même, à l'encontre du ressort de torsion 136. Dans cette position, les crochets 132, 132' ne retiennent plus la première tige 124. Dans la mesure où la toile 84 est tendue lorsqu'elle est accrochée, son élasticité favorise la sortie de la première tige 124 des crochets 132, 132'. La toile 84 n'étant plus accrochée, elle pivote de façon à dégager l'ouverture d'évacuation 58.

Bien entendu, l'invention n'est pas limitée aux modes de réalisation précédemment décrits. Ainsi, la trappe de secours 72 peut ne pas comprendre de cadre 74 qui peut être alors remplacé par la structure 52 de l'avion ou par tout autre élément relié à ladite structure. Ainsi, quel que soit le mode de réalisation, le premier côté 86 de la toile 84, la gâche 96, les pattes de stabilisation 106, 106', la seconde tige 126 sont reliés directement à la structure 52 de l'avion ou indirectement à ladite structure 52 de l'avion par l'intermédiaire d'au moins une pièce comme par exemple un cadre 74.

## Revendications

1. Cabine de pilotage d'un avion comprenant une peau (50) extérieure rapportée sur une structure (52), une cloison intérieure (56) délimitant la cabine, et une ouverture d'évacuation (58) traversant ladite peau (50) extérieure et ladite cloison intérieure (56), ladite ouverture d'évacuation (58) étant obturée par :
- une porte de secours (60) montée articulée sur la structure (52) entre une position fermée dans laquelle la porte de secours (60) est disposée dans le prolongement de la peau (50) extérieure et obture ladite ouverture d'évacuation (58) et une position ouverte dans laquelle la porte de secours (60) pivote vers l'intérieur de la cabine, ladite porte de secours (60) comprenant des moyens de verrouillage/déverrouillage (64),
- une trappe de secours (72), mobile entre une position fermée dans laquelle la trappe de secours (72) assure la continuité de la cloison intérieure (56) de la cabine et une position ouverte, ladite trappe de secours (72) comprenant un mécanisme de verrouillage/déverrouillage (88, 88'),
**caractérisée en ce que** la trappe de secours (72) comprend une toile (84) reliée de manière permanente à la structure (52), par un premier côté (86) et **en ce que** le mécanisme de verrouillage/déverrouillage (88) comprend :
- une première partie solidaire d'un deuxième côté (90), opposé au premier côté (86) et une deuxième partie solidaire de la structure (52), les première et deuxième parties coopérant à l'état verrouillé de manière à accrocher le deuxième côté (90) de la toile (84) à la structure (52), et
- une tige (92, 122) solidarisée au deuxième côté (90) et une manette (108, 124) actionnable depuis la cabine et reliée à ladite tige (92, 122).

2. Cabine de pilotage d'un avion selon la revendication 1, **caractérisée en ce que** la toile (84) est élastique ou comprend au moins une bande élastique de manière à ce que la toile soit tendue lorsqu'elle obture l'ouverture d'évacuation.

3. Cabine de pilotage d'un avion selon la revendication 1 ou 2, **caractérisée en ce que** la première partie du mécanisme de verrouillage/déverrouillage (88) comprend un crochet (94) solidaire de la tige (92) et qui coopère avec la deuxième partie comprenant une gâche (96).

4. Cabine de pilotage d'un avion selon l'une des revendications 1 à 3, **caractérisé en ce que** la trappe de secours (72) comprend au moins une patte de stabilisation (106, 106') solidaire de la structure (52), configurée pour limiter le basculement de la tige (92) vers la porte de secours (60) lorsque la toile (84) obture l'ouverture d'évacuation (58).

5. Cabine de pilotage d'un avion selon l'une des revendications 1 à 4, **caractérisée en ce que** le mécanisme de verrouillage/déverrouillage (88) comprend un levier (110) qui comporte une première extrémité (118) reliée à la tige (92) et une seconde extrémité (120) orientée vers la porte de secours (60), ledit levier (110) étant automatiquement actionnable par ladite porte de secours (60) lors de son pivotement vers l'intérieur de la cabine.

6. Cabine de pilotage d'un avion selon la revendication 1, **caractérisée en ce que** le mécanisme de verrouillage/déverrouillage (88') comprend une seconde tige (126) qui comporte au moins un crochet (132, 132') configuré pour retenir la première tige (122), ladite seconde tige (126) étant reliée à la structure (52) par l'intermédiaire d'une liaison pivotante de manière à occuper une position de maintien dans laquelle le crochet (132, 132') retient la première tige (124) et une position pivotée dans laquelle le crochet (132, 132') ne retient plus la première tige (124).

7. Cabine de pilotage d'un avion selon la revendication 6, **caractérisée en ce que** le mécanisme de verrouillage/déverrouillage (88') comprend au moins un ressort de torsion (136) configuré pour maintenir la seconde tige (126) dans la position de maintien.

8. Cabine de pilotage d'un avion selon la revendication 6 ou 7, **caractérisée en ce que** le mécanisme de verrouillage/déverrouillage (88') comprend un levier (134) qui comporte une première extrémité reliée à la seconde tige (126) et une seconde extrémité orientée vers la porte de secours (60), ledit levier (134) étant automatiquement actionnable par ladite porte de secours (60) lors de son pivotement vers l'intérieur de la cabine.

## Patentansprüche

1. Pilotenkanzel eines Flugzeugs mit einer auf eine Struktur (52) aufgebrachten Außenhaut (50), einer die Kanzel begrenzenden Innenwand (56) und einer Evakuierungsöffnung (58), die die Außenhaut (50) und die Innenwand (56) durchquert, wobei die Evakuierungsöffnung (58) geschlossen ist durch:
- eine Rettungstüre (60), die an der Struktur (52) zwischen einer geschlossenen Stellung, in der die Rettungstür (60) in der Verlängerung der Außenhaut (50) angeordnet ist und die Evakuierungsöffnung (58) verschließt, und einer offenen Stellung, in der die Rettungstüre (60) zum Inneren der Kanzel hin verschwenkt ist, bewegbar angebracht ist, wobei die Rettungstüre (60) Mittel zum Verriegeln/Entriegeln (64) aufweist,
- eine Rettungsfalltüre (72), die zwischen einer geschlossenen Stellung, in der die Rettungsfalltüre (72) die Fortsetzung der Innenwand (56) der Kanzel gewährleistet, und einer offenen Stellung beweglich ist, wobei die Rettungsfalltüre (72) einen Mechanismus zum Verriegeln/Entriegeln (88, 88') aufweist,
**dadurch gekennzeichnet, dass** die Rettungsfalltüre (72) eine Bahn (84) aufweist, die auf einer ersten Seite (86) auf dauerhafte Weise mit der Struktur (52) verbunden ist, und dass der Mechanismus zum Verriegeln/Entriegeln (88) umfasst:
- einen ersten Teil, der mit der zur ersten Seite (86) entgegengesetzten zweiten Seite (90) verbunden ist und einen zweiten Teil, der mit der Struktur (52) verbunden ist, wobei der erste und zweite Teil im verriegelten Zustand zusammenwirken, um auf diese Weise die zweite Seite (90) der Bahn (84) an der Struktur (52) festzumachen, und
- eine Stange (92, 122), die an der zweiten Seite (90) angebracht ist und einen Griff (108, 124), der von der Kanzel aus betätigbar ist und mit der Stange (92, 122) verbunden ist.

2. Pilotenkanzel eines Flugzeugs nach Anspruch 1, **dadurch gekennzeichnet, dass** die Bahn (84) elastisch ist oder wenigstens ein elastisches Band derart aufweist, dass die Bahn gespannt ist, wenn diese die Evakuierungsöffnung verschließt.

3. Pilotenkanzel eines Flugzeugs nach Anspruch 1 oder 2, **dadurch gekennzeichnet, dass** der erste Teil des Mechanismus zum Verriegeln/Entriegeln (88) einen mit der Stange (92) verbundenen Haken (94) aufweist, der mit dem zweiten Teil zusammenwirkt, der eine Schließplatte (96) umfasst.

4. Pilotenkanzel eines Flugzeugs nach einem der Ansprüche 1 bis 3, **dadurch gekennzeichnet, dass** die Rettungsfalltüre (72) wenigstens eine Stabilisierungslasche (106, 106') aufweist, die mit der Struktur (52) verbunden ist und dazu eingerichtet ist, das Verschwenken der Stange (92) zur Rettungstüre (60) hin zu begrenzen, wenn die Bahn (84) die Evakuierungsöffnung (58) verschließt.

5. Pilotenkanzel eines Flugzeugs nach einem der Ansprüche 1 bis 4, **dadurch gekennzeichnet, dass** der Mechanismus zum Verriegeln/Entriegeln (88) einen Hebel (110) aufweist, der ein mit der Stange (92) verbundenes erstes Ende (118) und ein zur Rettungstüre (60) ausgerichtetes zweites Ende (120) aufweist, wobei der Hebel (110) automatisch durch die Rettungstüre (60) bei deren Verschwenken in das Innere der Kanzel betätigbar ist.

6. Pilotenkanzel eines Flugzeugs nach Anspruch 1, **dadurch gekennzeichnet, dass** der Mechanismus zum Verriegeln/Entriegeln (88') eine zweite Stange (126) aufweist, die über wenigstens einen Haken (132, 132') verfügt, der dazu eingerichtet ist, die erste Stange (122) zurückzuhalten, wobei die zweite Stange (126) mit der Struktur (52) mittels einer verschwenkbaren Verbindung derart verbunden ist, dass in einer Haltestellung der Haken (132, 132') die erste Stange (124) zurückhält und in einer verschwenkten Stellung der Haken (132, 132') die erste Stange (124) nicht mehr zurückhält.

7. Pilotenkanzel eines Flugzeugs nach Anspruch 6, **dadurch gekennzeichnet, dass** der Mechanismus zur Verriegelung/Entriegelung (88') wenigstens eine Torsionsfeder (136) aufweist, die dazu eingerichtet ist, die zweite Stange (126) in der Haltestellung zu halten.

8. Pilotenkanzel eines Flugzeugs nach Anspruch 6 oder 7, **dadurch gekennzeichnet, dass** der Mechanismus zur Verriegelung/Entriegelung (88') einen Hebel (134) aufweist, der ein mit der zweiten Stange (126) verbundenes erstes Ende und ein zur Rettungstüre (60) ausgerichtetes zweites Ende umfasst, wobei der Hebel (134) durch die Rettungstüre (60) bei deren Verschwenken in das Innere der Kanzel automatisch betätigbar ist.

## Claims

1. Aeroplane flight deck comprising an external skin (50) attached to a structure (52), an internal bulkhead (56) delimiting the flight deck, and an escape opening (58) passing through said external skin (50) and said internal bulkhead (56), said escape opening (58) being closed off by:
- an emergency door (60) mounted in a manner hinged on the structure (52) between a closed position, in which the emergency door (60) is disposed in line with the external skin (50) and closes off said emergency opening (58), and an open position, in which the emergency door (60) pivots towards the inside of the flight deck, said emergency door (60) comprising locking/unlocking means (64),
- an emergency hatch (72) that is movable between a closed position, in which the emergency hatch (72) ensures the continuity of the internal bulkhead (56) of the flight deck, and an open position, said emergency hatch (72) comprising a locking/unlocking mechanism (88, 88'),
**characterized in that** the emergency hatch (72) comprises a sheeting (84) permanently connected to the structure (52) by a first side (86), and **in that** the locking/unlocking mechanism (88) comprises:
- a first part secured to a second side (90), away from the first side (86), and a second part secured to the structure (52), the first and second parts engaging in the locked state so as to couple the second side (90) of the sheeting (84) to the structure (52), and
- a rod (92, 122) secured to the second side (90) and a lever handle (108, 124) that is actuable from the flight deck and is connected to said rod (92, 122).

2. Aeroplane flight deck according to Claim 1, **characterized in that** the sheeting (84) is elastic or comprises at least one elastic strip such that the sheeting is tautened when it closes off the escape opening.

3. Aeroplane flight deck according to Claim 1 or 2, **characterized in that** the first part of the locking/unlocking mechanism (88) comprises a hook (94) secured to the rod (92), said hook (94) engaging with the second part comprising a strike (96).

4. Aeroplane flight deck according to one of Claims 1 to 3, **characterized in that** the emergency hatch (72) comprises at least one stabilizing tab (106, 106') secured to the structure (52), said stabilizing tab (106, 106') being configured to limit the tilting of the rod (92) towards the emergency door (60) when the sheeting (84) is closing off the escape opening (58).

5. Aeroplane flight deck according to one of Claims 1 to 4, **characterized in that** the locking/unlocking mechanism (88) comprises a lever (110) which has a first end (118) connected to the rod (92) and a second end (120) oriented towards the emergency door (60), said lever (110) being actuable automatically by said emergency door (60) as it pivots towards the inside of the flight deck.

6. Aeroplane flight deck according to Claim 1, **characterized in that** the locking/unlocking mechanism (88') comprises a second rod (126) which has at least one hook (132, 132') configured to retain the first rod (122), said second rod (126) being connected to the structure (52) by way of a pivot link so as to take up a holding position in which the hook (132, 132') retains the first rod (124) and a pivoted position in which the hook (132, 132') no longer retains the first rod (124).

7. Aeroplane flight deck according to Claim 6, **characterized in that** the locking/unlocking mechanism (88') comprises at least one torsion spring (136) configured to hold the second rod (126) in the holding position.

8. Aeroplane flight deck according to Claim 6 or 7, **characterized in that** the locking/unlocking mechanism (88') comprises a lever (134) which has a first end connected to the second rod (126) and a second end oriented towards the emergency door (60), said lever (134) being actuable automatically by said emergency door (60) as it pivots towards the inside of the flight deck.
